**Europäisches Patentamt**

**European Patent Office**

**Office européen des brevets**

(11) Veröffentlichungsnummer: **0 126 167**
**A1**

## EUROPÄISCHE PATENTANMELDUNG

(21) Anmeldenummer: **83104885.5**

(22) Anmeldetag: **18.05.83**

(51) Int. Cl.³: **C 04 B 31/40,** C 04 B 29/04,
E 04 C 5/07

(43) Veröffentlichungstag der Anmeldung: **28.11.84**
**Patentblatt 84/48**

(84) Benannte Vertragsstaaten: **AT BE CH DE FR GB IT LI LU NL SE**

(71) Anmelder: **BM Chemie Kunststoff GmbH,
Adolf-Flöring-Strasse 22, D-5678 Wermelskirchen (DE)**

(72) Erfinder: **Melchior, Bernd, Burgerstrasse 255,
D-5638 Remscheid (DE)**

(74) Vertreter: **Patentanwaltsbüro Cohausz & Florack,
Postfach 14 01 47, D-4000 Düsseldorf 1 (DE)**

(54) **Faserförmiger Zuschlag.**

(57) Die Erfindung betrifft einen faserförmigen Zuschlag für Beton oder Mörtel aus einer Faser (2) oder einem Faserbündel (3). Die Faser oder das Faserbündel trägt mindestens einen Körper (1), dessen Durchmesser größer ist als die Dicke der Faser oder des Faserbündels. Dabei ist die Länge der Faser oder des Faserbündels größer als der Durchmesser des Körpers.

EP 0 126 167 A1

# COHAUSZ & FLORACK  0126167

**PATENTANWALTSBÜRO**

**SCHUMANNSTR. 97  D-4000 DÜSSELDORF 1**

Telefon: (02 11) 68 33 46          Telex: 0858 6513 cop d

**PATENTANWÄLTE:**

Dipl.-Ing. W. COHAUSZ  ·  Dipl.-Ing. R. KNAUF  ·  Dipl.-Ing. H. B. COHAUSZ  ·  Dipl.-Ing. D. H. WERNER

Imchemie Kunststoff GmbH

Adolf-Flöring-Str. 22

5678 Wermelskirchen


Faserförmiger Zuschlag


Die Erfindung betrifft einen faserförmigen Zuschlag für Beton oder Mörtel, insbesondere Faserabschnitte aus einem Metall, Mineral oder Kunststoff.

Es ist bekannt, anorganische oder organische Fasern als Zuschlag einem Beton zuzumischen, um die Festigkeit des Betons zu erhöhen. Diese Fasern verteilen sich häufig nicht ausreichend gleichmäßig im Beton und bilden insbesondere Ansammlungen (Igelbildung), wodurch eine gleichmäßige Festigkeit des Betons nach seiner Erhärtung verhindert wird. Auch können die Fasern nicht beliebig dünn sein, da sehr dünne Fasern während des Mischvorganges eine Längserstreckung nicht beibehalten, sondern meist eng zusammenliegen.

Als sehr leichter Zuschlag für einen Leichtbeton sind Kugeln aus geschäumtem Polystyrol bekannt, die die Wärmeleitfähigkeit des Betons verringern. Dieser Zuschlag ver-

35 262
HC/Be

ringert aber die Festigkeit des Betons und zeigt darüber hinaus das Problem, daß die Polystyrolkugeln leicht während des Mischens des Betons nach oben aufschwimmen, so daß eine gleichmäßige Verteilung nicht gewährleistet ist.

Aufgabe der Erfindung ist es, einen faserförmigen Zuschlag für Beton oder Mörtel zu schaffen, der sich im Beton gleichmäßig verteilt und dessen Faser eine ausreichende Längserstreckung beibehält.Darüber hinaus ist es Aufgabe der Erfindung, einen faserförmigen Zuschlag für Beton oder Mörtel zu schaffen, dessen Faserdicke sehr gering sein kann. Ferner ist es Aufgabe der Erfindung, einen leichten Zuschlag zu schaffen, der die Zugfestigkeit des Beton nur geringfügig verringert und im Beton nicht aufschwimmt. Auch ist es Aufgabe der Erfindung, einen faserförmigen Zuschlag für Beton oder Mörtel zu schaffen, der einfach und preiswert in Massen herstellbar ist. Ferner ist es Aufgabe der Erfindung, ein einfaches und preiswertes Verfahren zur Herstellung eines faserförmigen Zuschlages aufzuzeigen.

Diese Aufgabe wird erfindungsgemäß dadurch gelöst, daß die Faser oder ein Faserbündel mindestens einen Körper trägt, dessen Durchmesser größer ist als die Dicke der Faser oder des Faserbündels.

Die Faser oder die Fasern durchdringen den Zuschlagskörper[+] und haben mit der verbleibenden Faserlänge beidseitig außerhalb des Korns bei hinreichender Haftlänge einen ausreichenden Kontakt mit dem Bindemittel des Betons oder Mörtels. Obwohl damit die Faser oder die Faserbündel im mittleren Bereich oder mittleren Bereichen keinen Kontakt mit dem Bindemittel haben, wird ein ausreichender Halt

[+]bzw. das Zuschlag-Korn

geschaffen und die Zugfestigkeit im Bereich des Zuschlags, insbesondere eines Leichtzuschlags erhöht, so daß der Leichtzuschlag keine Korneigenfestigkeit aufweisen muß. Da der auf der Faser oder dem Faserbündel aufsitzende Körper dafür sorgt, daß zumindest über dem Bereich des Körpers die Faser oder das Faserbündel gestreckt bleibt, wird ein Verknäulen der Fasern ausreichend verhindert. Auch kommt es nicht mehr zu Igelbildung. Dabei können sehr dünne Fasern verwendet werden, so daß man bis an die Reißgrenze der Fasern herunterkommen kann und damit der Materialanteil der Fasern gering sein kann. So kann man z.B. bei Stahlfasern den Stahlanteil mindestens um die Hälfte verringern. Darüber hinaus ergibt sich der Vorteil, daß bei dünnen Fasern kürzere Lasteinleitungslängen ausreichen, so daß auch hierdurch der Materialanteil der Fasern geringer sein kann. Besonders gut eignet sich ein derartiger Zuschlag für Spritzbeton, da die mit Körpern teilweise umhüllten Fasern geringeren Rückprall aufweisen.

Der erfindungsgemäße Zuschlag eignet sich besonders für Leichtbeton, da bei einem Körper aus leichtem Material verhältnismäßig geringer Festigkeit die Zugfestigkeit des Betons durch Fasern exakt an den Stellen verbessert wird, an denen der Beton aufgrund des leichten Zuschlags geschwächt ist. Auch schwimmt ein solch leichter Zuschlag nicht mehr im Beton auf. Somit ist ein leichter Beton mit ausgezeichneten Wärmedämmeigenschaften und hoher Zug- und Druckfestigkeit erzielbar.

Von Vorteil ist es, wenn die Faser oder das Faserbündel etwa mittig durch den Körper verläuft, da dann auf den Hohlraum des festen Betons oder Mörtels, der von dem Körper ausgefüllt ist, einwirkende Zugkräfte optimal von der Faser oder dem Faserbündel aufgenommen werden. Die beiden Enden der Faser oder des Faserbündels sollen nicht von einem Körper umgeben sein, d.h. sie sollten frei von einem Körper sein, damit sich diese Enden im Bindemittel des Betons oder Mörtels verankern. Ein Teil der Faser oder des Faserbündels soll somit zu beiden Seiten des Körpers herausragen, oder an den Körper grenzt ein weiterer Körper an, aus dem dann wiederum auf der dem ersten Körper abgewandten Seite die Faser oder das Faserbündel herausragt.

Im Körper können sich zwei oder mehr Fasern oder Faserbündel kreuzen. Hierdurch kann im Bereich eines Körpers eine Zugfestigkeit in zwei oder mehr voneinander unterschiedlichen Richtungen erreicht werden. Besonders vorteilhaft ist es, wenn dabei die sich kreuzenden Fasern oder Faserbündel zueinander etwa rechtwinklig liegen, da dann eine optimale Kräfteaufnahme gewährleistet ist. Hierzu wird auch vorgeschlagen, daß drei Fasern oder Faserbündel entsprechend drei zueinander rechtwinkligen Raumachsen sich kreuzen.

Größere Zuschläge bei geringem Materialanteil sowohl der Faser als auch des Körpers, und bei hoher Zugfestigkeit werden dadurch erreicht, daß bei zwei oder mehreren Körpern auf einer Faser oder einem Faserbündel jeder Körper zusätzlich quer zur ersten Faser oder Faserbündel angeordnete Fasern oder Faserbündel trägt (Fig.9). Vorzugsweise wird hierzu vorgeschlagen, daß drei, vier oder mehr Körper von drei, vier oder mehr Fasern oder Faserbündeln durchdrungen sind, von denen jede mindestens zwei Körper durchquert (Fig. 11, 14). Hierdurch können auch großflächige und räumlich angeordnete Zuschläge geschaffen werden.

Der Durchmesser der Körper sollte ein Vielfaches der Dicke der Fasern oder des Faserbündels betragen, da die Faser oder das Faserbündel verhältnismäßig dünn sein können. Dabei kann der Durchmesser der Körper 10-1000fach größer sein als die Dicke der Faser oder des Faserbündels ist. Vorzugsweise wird vorgeschlagen, daß der Durchmesser der Körper nicht größer ist als ein Drittel der Faserlänge oder Faserbündellänge. Der Körper kann aus einem Mineral, Kunststoff oder aus Zellulose bestehen.

Ein besonders leichter Zuschlag, und dadurch ein Leichtbeton, ist dadurch erreichbar, daß der Körper und/oder das Material des Körpers ein geringeres spezifisches Gewicht hat als die übrigen Bestandteile des Betons oder Mörtels. Dabei kann der Körper einen oder mehrere Hohlräume aufweisen. Vorzugsweise besteht der Körper aus erhärtetem Schaum. Vorzugsweise wird vorgeschlagen, daß der Körper aus geschäumtem Kunststoff, insbesondere geschäumtem Polystyrol besteht.

Der Körper ist einfach und preiswert herstellbar, wenn er die Form einer Kugel, eines Tropfens, Zylinders oder Quaders hat. Dabei ist die Form einer Kugel besonders vorteilhaft, da der durch eine Kugel erzeugte, von Bindemittel freie Raum im Beton oder Mörtel aufgrund seiner kugeligen Form und dem mittigen Durchdringen durch eine Faser oder Faserbündel besonders hohe Druckkräfte aufnehmen kann.

Ein besonders guter Halt des Zuschlags im Beton oder Mörtel wird dadurch erreicht, wenn die Faserenden oder Faserbündelenden gebogen, insbesondere hakenförmig umgebogen sind.

Vorzugsweise wird vorgeschlagen, daß zwei oder mehr Körper auf einer Faser oder einem Faserbündel in Abständen oder aneinanderliegend angeordnet, insbesondere befestigt sind. Hierdurch können lange, kettenförmige Zuschläge geschaffen werden, ohne daß die Gefahr besteht, daß diese Zuschläge miteinander verknäulen. Vorzugsweise wird vorgeschlagen, daß die Körper durch Gießen, Schmelzen, Schweißen, Tauchen, Kleben oder einstückige Ausformung auf der Faser oder dem Faserbündel befestigt sind. Auch kann Faser oder Faserbündel und Körper aus demselben Material sein.

Die Faser kann von einer Kunststoffschnur gebildet sein, in der eine Glasfaser oder ein Stahldraht einliegt. Alternativ kann auch die Faser oder das Faserbündel aus mindestens zwei Einzelfasern bestehen, die miteinander verdrillt sind. Eine dieser Einzelfasern ist eine Kunststofffaser.

Ein besonders vorteilhafter Zuschlag wird dadurch geschaffen, daß die Faser oder das Faserbündel zu einem Ring geschlossen sind. Hierdurch ist eine sichere Verankerung im Bindemittel bei einfacher Herstellung und guter Verteilung im Beton oder Mörtel gegeben. Vorzugsweise können auf dem Ring mindestens zwei Körper angeordnet sein.

Zur Herstellung eines solchen Ringes wird vorgeschlagen, daß die Enden des Faser- oder Faserbündelabschnittes miteinander verdrillt oder zusammengeschweißt oder gelötet sind. Alternativ oder zusätzlich können die Enden des Faser- oder Faserbündelabschnittes durch einen Körper, insbesondere einen Kunststofftropfen aneinander befestigt sein. Ein sicheres Befestigen der Faserenden oder Faserbündelenden wird dadurch erzielt, daß die beiden Enden eines Faser- oder Faserbündelabschnittes jeweils in einem Körper einliegen bzw. enden. Dabei können die Enden in verschiedenen Körpern einliegen. Von Vorteil ist es auch, wenn zumindest über einen Teil des Ringes die Faser oder das Faserbündel doppelt liegt.

Ein einfaches Verfahren zur preiswerten Herstellung des Zuschlags wird dadurch geschaffen, daß Körper, insbesondere thermoplastische Kunststoffkörper auf eine heiße Faser oder ein heißes Faserbündel aufgebracht werden und die Faser oder das Faserbündel umschmelzen. Dieses Verfahren wie auch die im folgenden angeführten Verfahren lassen eine kontinuierliche und automatische Herstellung zu.

Ein alternatives Verfahren besteht darin, daß weicher Kunststoff auf die Faser oder das Faserbündel aufgebracht, insbesondere auffließt, aufgetropft oder aufgedrückt wird. Auch wird vorgeschlagen, daß die Kunststoffkörper treibmittelhaltig und insbesondere aus Polystyrol oder einem Kunststoffharz sind. Dabei können nach dem Aufbringen der Kunststoffkörper diese insbesondere durch Energiezufuhr aufschäumen.

Als ein weiteres Verfahren wird vorgeschlagen, daß eine treibmittelhaltige Kunststoffaser, insbesondere eine mit Stahldraht verzwirnte Kunststoffaser durch partielle Energiezufuhr, insbesondere partielles Erwärmen stellenweise aufgeschäumt wird. Nach dem Aufbringen der Kunststoffkörper auf eine vorbeilaufende lange Faser oder langes Faserbündel kann die Faser oder das Faserbündel in Körper tragende Abschnitte getrennt werden.

Ein weiteres vorteilhaftes Herstellungsverfahren besteht darin, daß auf mehrere parallel in einer Ebene zueinander angeordnete Fasern oder Faserbündel großer Länge quer dazu angeordnete, zueinander parallele Stränge aus dem Material der Körper, insbesondere Kunststoffstränge gelegt werden, die Fasern in das Material der Stränge eindringen, insbesondere durch Einschmelzen oder aufgrund der weichen Konsistenz des Materials, und danach die Fasern bzw. die Faserbündel und die Stränge in die gewünschten Längen getrennt werden.

Ein vorteilhaftes Herstellungsverfahren wird auch dadurch geschaffen, daß auf mehrere in einer Ebene zueinander parallel angeordnete Fasern oder Faserbündel großer Länge quer dazu angeordnete, zueinander parallele Fasern oder Faserbündel gelegt werden und auf den Kreuzungspunkten Körper, insbesondere Kunststoffkugeln, -perlen oder -tropfen aufschmelzen, auffließen oder aufgedrückt werden. Dieses Verfahren ermöglicht es, nicht nur Zuschläge mit einem einzigen Körper, sondern auch mit mehreren zu schaffen.

Bei all diesen Verfahren können während der Herstellung Fasern und Kunststoff in Richtung einer Faserlängsachse oder quer dazu kontinuierlich oder schrittweise insbesondere zur Schneidvorrichtung hin bewegt werden. Eine besonders sichere und schnelle Befestigung der Körper auf den Fasern oder den Fasersträngen wird dadurch erreicht, daß die Körper oder die Stränge auf die Fasern aufgewalzt werden. Dabei können die Walzen Nuten oder Ausnehmungen aufweisen, die das strangförmige Material der Körper oder die einzelnen Körper tragen oder führen.

Ausführungsbeispiele der Erfindung sind in den Zeichnungen teilweise schematisch dargestellt und werden im folgenden näher beschrieben. Es zeigen:

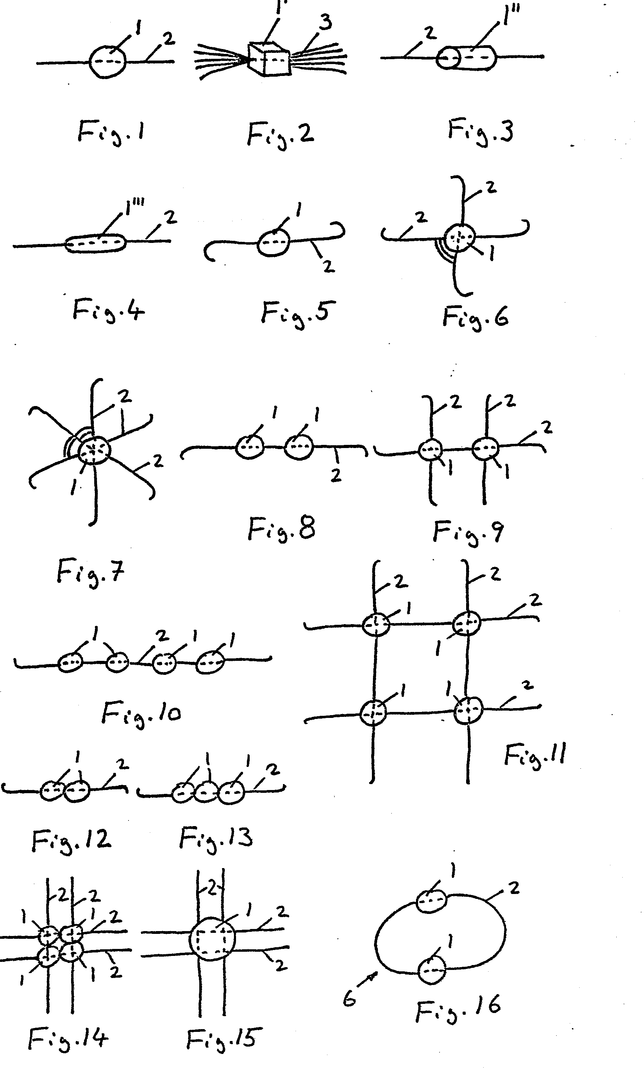

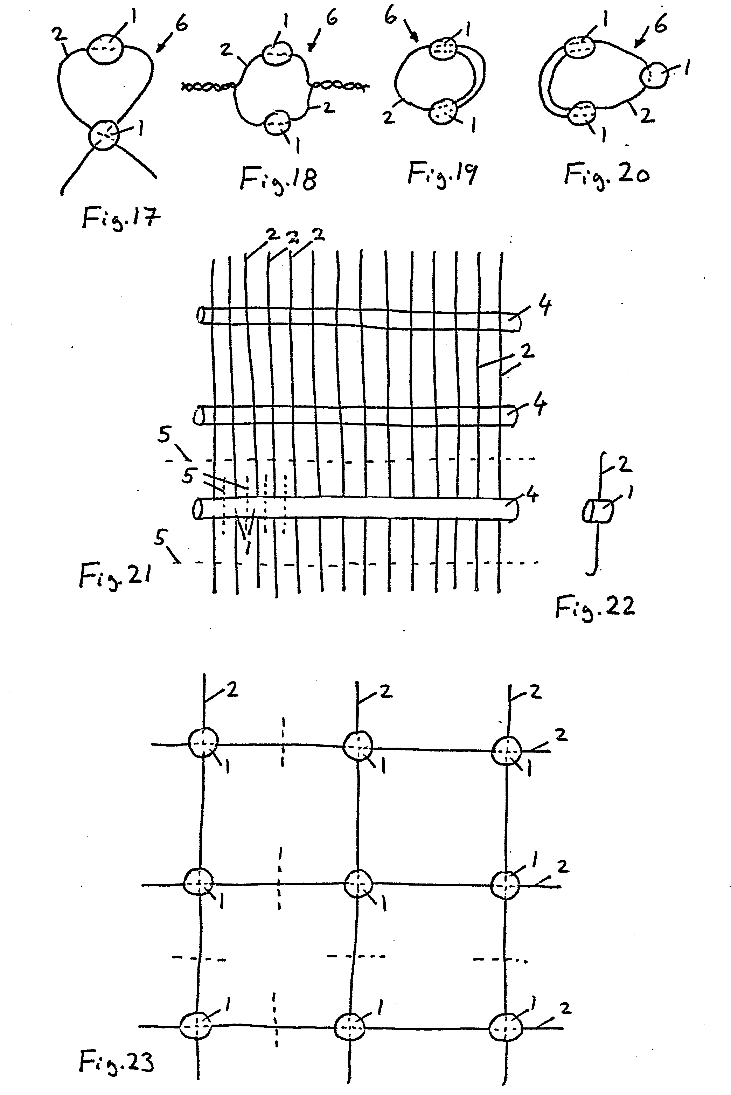

Fig. 1    eine Ansicht eines Zuschlags mit kugelförmigem Körper und einer einzigen Faser;

Fig. 2    eine perspektivische Ansicht eines Zuschlags mit würfelförmigem Körper und Faserbündel;

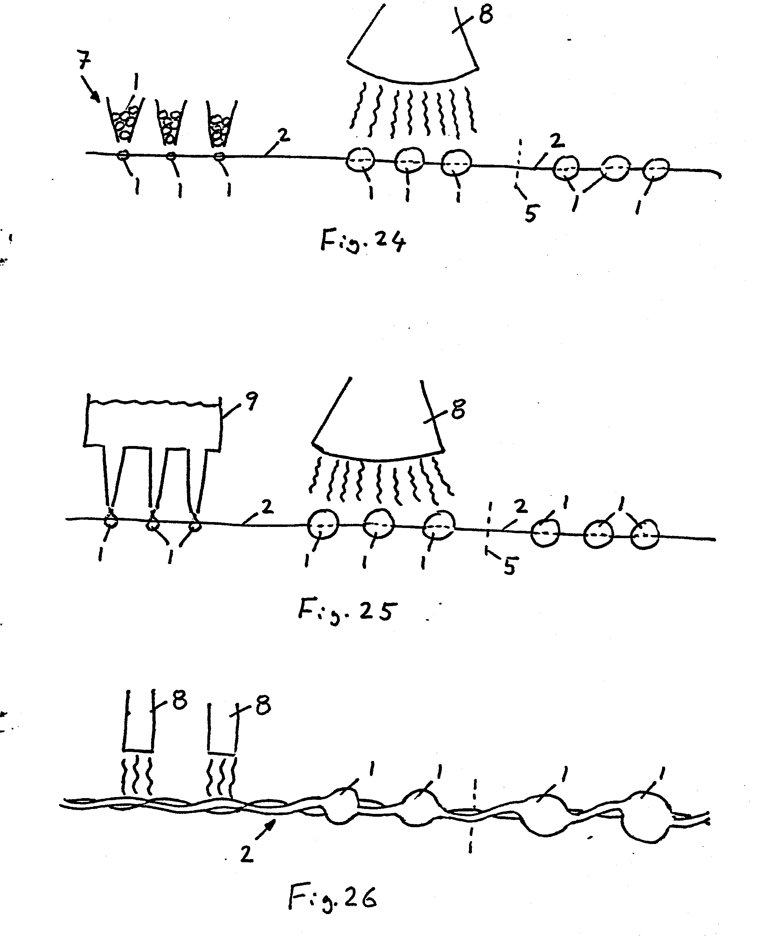

Fig. 3    einen Zuschlag mit zylindrischem Körper;

Fig. 4    einen Zuschlag mit länglichem Körper;

Fig. 5    einen Zuschlag mit kugelförmigem Körper und abgebogenen Faserenden;

Fig. 6    einen Zuschlag mit kugelförmigem Körper und zwei einander rechtwinklig kreuzenden Fasern im selben Körper;

Fig. 7    einen kugelförmigen Körper mit drei zueinander jeweils rechtwinklig kreuzenden Fasern;

Fig. 8    einen Zuschlag mit zwei zueinander im Abstand angeordneten kugelförmigen Körpern;

Fig. 9    einen Zuschlag nach Fig. 8 mit zusätzlichen quer angeordneten Fasern pro Körper;

Fig. 10   eine Faser mit mehreren im Abstand angeordneten Körpern;

0126167

Fig. 11      vier Fasern, von denen jeweils zwei parallele Fasern einander rechtwinklig kreuzen
und auf den Kreuzungspunkten kugelförmige
Körper befestigt sind;

Fig. 12      zwei bzw. drei nebeneinander angeordnete
und 13       kugelförmige Körper auf einer Faser;

Fig. 14      vier im Quadrat eng aneinander anliegende
kugelförmige Körper mit vier Fasern, die
einander rechtwinklig kreuzen;

Fig. 15      vier Fasern, von denen jeweils zwei einander sich rechtwinklig kreuzen und die vier
Kreuzungspunkte von einem einzigen kugel-
oder scheibenförmigen Körper umgeben sind;

Fig. 16      einen Zuschlag, bei dem die Faser oder das
Faserbündel zu einem Ring geschlossen ist
und zwei kugelförmige Körper aufgesetzt
sind;

Fig. 17      einen Ring mit einander kreuzenden Faserenden, wobei der Kreuzungspunkt durch einen
kugelförmigen Körper gehalten ist;

Fig. 18      einen Ring aus zwei Fasern, die jeweils
einen Körper tragen und deren Enden verdrillt sind;

Fig. 19      einen Ring mit zwei bzw. drei Körpern, wo-
und 20       bei die Fasernenden in kugelförmigen Körpern
einliegen und ein Ringabschnitt zwischen
zwei Körpern doppelt liegt;

Fig. 21     ein Gitter aus parallelen Fasern, auf die Kunststoffstränge rechtwinklig dazu aufgeschmolzen sind, um nach Auseinanderschneiden einen Zuschlag nach Fig. 22 zu bilden;

Fig. 23     ein Gitter aus gekreuzten Fasern mit auf den Kreuzungspunkten befestigten kugelförmigen oder scheibenförmigen Körpern, um nach einem mittigen Trennen der Fasern einzelne Zuschlagsteile zu erhalten;

Fig. 24     eine schematische Darstellung eines Herstellungsverfahrens, bei dem thermoplastische Kunststoffkörper auf eine heiße Faser oder ein heißes Faserbündel aufgeschmolzen werden;

Fig. 25     eine schematische Darstellung eines Herstellungsverfahrens mit weichem Kunststoff, der auf die Faser oder das Faserbündel auffließt; und

Fig. 26     eine schematische Darstellung eines Herstellungsverfahrens mit einer treibmittelhaltigen Kunststoffaser, die zum Aufschäumen stellenweise erwärmt wird.

Das in den Figuren 1 bis 7 dargestellte Grundprinzip besteht darin, daß ein Zuschlagkorn oder -teil, im folgenden Körper 1 genannt, von einem Faserabschnitt 2 oder Faserbündel 3 mittig und insbesondere diametral durchdrungen ist, so daß die Faser 2 oder das Faserbündel 3 in einem mittleren Bereich den Körper 1 trägt und die freien Abschnitte bzw. Enden aus dem Körper 1 herausragen, so daß der Faserabschnitt oder das Faserbündel stets länger ist als der Durchmesser des Körpers 1 oder mehrerer nebeneinander liegender Körper und die auf gegenüberliegenden Seiten vorstehenden Bereiche der Faser oder des Faserbündels im Bindemittel des Betons oder des Mörtels eingebettet und damit verankert sind. Die Fasern 2 oder Faserbündel 3 nehmen die Zugkräfte auf, während der Körper 1 dafür sorgt, daß die Fasern oder Faserbündel zumindest über den Bereich des Körpers ausgerichtet bleiben und sich mit anderen Fasern nicht verknäulen (Igelbildung). In allen Figuren der Zeichnungen kann immer dann, wenn eine Faser 2 bezeichnet ist, auch ein Faserbündel 3 verwendet sein.

Da die Fasern 2 durch den Körper 1 gehalten werden, können die Fasern eine sehr geringe Dicke besitzen, insbesondere bei Stahlfasern eine Dicke von 0,03 bis 0,3 mm Der Durchmesser des Körpers 1 beträgt ein Vielfaches der Dicke der Fasern oder der Faserbündel. Insbesondere ist der Durchmesser des Körpers 10 bis 1000fach größer als die Dicke einer Faser oder eines Faserbündels. Dagegen ist die Länge einer Faser oder eines Faserbündels größer als der Durchmesser des Körpers, wobei die Faser oder das Faserbündel mehr als dreimal so lang sein sollte wie der Körperdurchmesser.

Das Material des Körpers ist ein Mineral, Kunststoff oder Zellulose oder Mischungen aus diesen, wobei es von Vorteil ist, wenn dieses Material ein geringeres spezifisches Gewicht hat als das Bindemittel des Betons oder Mörtels. Eine Verringerung des Gewichts des Körpers wird dadurch erreicht, daß er ein Hohlkörper ist oder aber mehrere Hohlräume aufweist. Dabei kann der Körper aus erhärtetem Schaum, insbesondere aus geschäumtem Kunststoff, wie z.B. geschäumtem Polystyrol, bestehen. Aber auch Schlacke, Kunststoffharze, Polymere und Glas können u.a. verwendet werden.

Die Körper 1 und 1' bis 1"" werden durch Gießen, Schmelzen, Schweißen, Tauchen oder Kleben auf der Faser oder dem Faserbündel befestigt. Die Faser kann von den verschiedensten Materialien gebildet sein und insbesondere auch aus dem Material des Körpers bestehen. Als Fasermaterial bietet sich besonders Stahl und Kunststoff als auch ein Silikat wie Schlacke oder Glas an. Kombinationen dieser Materialien können vorteilhaft sein, insbesondere kann die Faser von einer Kunststoffschnur gebildet sein, in der eine Glasfaser oder ein Stahldraht einliegt. Ferner können die Fasern aus miteinander verdrillten bzw. verzwirnten Einzelfasern bestehen. Damit können die Fasern auch Seilabschnitte sein.

Der Körper 1 kann die verschiedensten Formen aufweisen. In Fig. 2 ist er quader- oder würfelförmig, in Fig. 3 zylindrisch, in Fig. 4 länglich oder oval, in Fig. 15 scheibenförmig, und auch eine Tropfenform oder eine unregelmäßige Klumpenform ist zulässig.

Im Körper 1 können sich zwei oder mehr Fasern oder Faserbündel kreuzen. Dabei können, wie in Fig. 6 und 7 dargestellt, zwei oder drei Fasern zueinander rechtwinklig liegen, so daß sie zwei oder drei Raumachsen bilden. Die Faser- oder Faserbündelenden können umgebogen sein, um einen besseren Halt im Bindemittel zu finden, Fig. 5 bis 13.

Wie in den Figuren 8 bis 26 dargestellt, können zwei oder mehr Körper auf einem einzigen Faserabschnitt oder einem einzigen Faserbündelabschnitt befestigt sein. Dabei können die Körper im Abstand (Fig. 8 bis 11) oder dicht aneinander liegend und sich berührend (Fig. 12 bis 14) angeordnet sein. Bei einer dichten Anlage wird, wie auch beim länglichen Körper entsprechend Fig. 3 und 4, ein verhältnismäßig langer , nicht biegsamer Bereich der Faser oder des Faserbündels geschaffen.

Auch bei einer Anordnung mehrerer Körper auf einer Faser oder einem Faserbündel können in jedem Körper weitere Fasern oder Faserbündel angeordnet sein, die die erste Faser insbesondere rechtwinklig kreuzen. Dies ist in Fig. 9 bei zwei Körpern und in den Figuren 11 und 14 bei vier Körpern dargestellt. Hierbei können, wie in Fig. 11 und 14 gezeigt, die Fasern oder Faserbündel gitterförmig angeordnet sein. Während in Fig. 11 die vier Kreuzungspunkte von vier Fasern von vier einzelnen Körpern 1 umschlossen sind, liegen bei Fig. 15 die paarweise angeordneten Fasern so nahe beieinander, daß die Abstände der Kreuzungspunkte so nahe zueinander liegen, daß sie von einem einzigen Körper 1"' umschlossen werden.

Die Faser 2 oder das Faserbündel 3 bildet in den Figuren 16 bis 20 einen geschlossenen Ring, wobei in Fig. 16 die Enden aneinandergeschweißt oder -gelötet sind, in Fig.17 die Enden durch einen Körper 1 im Kreuzungspunkt umfaßt und gehalten sind und die freien Enden über diesen Körper hinausstehen, in Fig. 18 die Enden zweier Fasern oder Faserbündel miteinander verdrillt sind und in den Figuren 19 und 20 die Enden jeweils in verschiedenen Körpern einliegen bzw. enden, wobei in einem Bereich des Ringes bzw. in einem Ringabschnitt zwischen zwei Körpern die Faser oder das Faserbündel doppelt liegen.

Im folgenden werden verschiedene Verfahren zur Herstellung des Zuschlags beschrieben. Entsprechend Fig. 24 werden thermoplastische Kunststoffkörper* auf eine heiße Faser
oder ein heißes Faserbündel aufgebracht, wobei die
Körper die Faser oder das Faserbündel umschmelzen.
Der Kunststoff kann treibmittelhaltig sein und aus Polystyrol bestehen, so daß bei einer Energiezufuhr durch
UV- oder Infrarot-Strahlen[9] die in Fig. 24 links gezeigten, verhältnismäßig kleinen Kugeln aufschäumen. Danach
können sie erhärten, insbesondere durch eine Redox-
Polymerisation. Nach dem Erhärten wird die Faser oder
das Faserbündel in einzelne Abschnitte unterteilt, um
somit den gewünschten Zuschlag zu bilden. In dem in
Fig. 24 gezeigten Verfahren weist der Zuschlag 3 im Abstand angeordnete Körper 1 auf einer einzigen Faser 2
auf.

Das in Fig. 25 gezeigte Verfahren unterscheidet sich von
dem in Fig. 24 nur dadurch,** daß ein flüssiger Kunststoff
oder ein anderes flüssiges härtbares Material auf eine
insbesondere nicht erwärmte Faser oder Faserbündel tröpfchenweise auffließt, um danach wiederum aufzuschäumen,
zu erhärten und abgetrennt zu werden. Bei diesen beiden
Verfahren, wie auch dem folgenden, läuft die Faser kontinuierlich oder schrittweise vorwärts, so daß eine automatische Fabrikation ermöglicht wird.

Bei dem in Fig. 26 gezeigten Verfahren besteht die Faser
aus einem treibmittelhaltigen Kunststoff, dem nur an den
Stellen Energie, insbesondere Wärme zugeführt wird, an
denen der Kunststoff zur Bildung von Körpern aufschäumen
soll. Um die Kunststoffschnur kann eine Faser, insbesondere eine Stahlfaser gewunden sein, um Zugkräfte aufzunehmen. Alternativ kann die Zugkräfte aufnehmende Faser
aber auch innerhalb der Kunststoffschnur angeordnet sein.

\* durch einen Trichter oder Zuführungsrohr 7
\*\* durch eine Auftragdüse eines Behälters 9

Nach dem in Fig. 21 dargestellten Verfahren wird eine Schar von zueinander parallelen Fasern 2 von quer, insbesondere rechtwinklig dazu angeordneten Materialsträngen 4 überdeckt, die insbesondere aus Kunststoff sind. Durch Einschmelzen oder Eindrücken der Fasern oder Faserbündel in die Stränge 4 wird ein Gitter erzeugt, das an den punktierten Linien 5 auseinandergeschnitten wird, um den gewünschten Zuschlag zu erhalten. Dabei können allein durch Bestimmung der Schnittlinien unterschiedlich große Zuschläge erreicht werden. Es werden dabei sowohl die Stränge 4 als auch die Fasern 2 bzw. Faserbündel geschnitten. Bei einer kontinuierlichen Herstellung kann das Gitter entweder in Längsrichtung der Stränge oder der Fasern bzw. Faserbündel bewegt werden.

Das in Fig. 23 dargestellt Verfahren unterscheidet sich von dem nach Fig. 21 dadurch, daß das gesamte Gitter aus Fasern 2 oder Faserbündeln besteht, die zueinander rechtwinklig angeordnet sind, wobei die Kreuzungspunkte von Körpern umgeben sind, die eingeschmolzen, aufgeflossen oder aufgedrückt sind. Das Gitter kann wiederum an unterschiedlichen Stellen 5 geschnitten werden, um je nach Bedarf unterschiedlich große Zuschläge zu erhalten. Nach den Schnittstellen in Fig. 23 werden Zuschläge entsprechend Fig. 6, 9 und 11 erhalten. Für eine kontinuierliche Herstellung kann das in Fig. 23 gezeigte Gitter in beiden Richtungen der Fasern 2 bzw. Faserbündel bewegt werden.

Ein einfaches, exaktes und schnelles Aufbringen der Stränge 4 in Fig. 21 und der Körper 1 in Fig. 23 wird dadurch erreicht, daß diese auf die Fasern 2 oder Faserbündel aufgewalzt werden, wobei die Walzen für die Stränge 4 Nuten bzw. für die Körper 1 muldenförmige Ausnehmungen aufweisen, um das Material der Körper sehr genau auf die Fasern oder Faserbündel aufzudrücken.

# COHAUSZ & FLORACK    0126167

### PATENTANWALTSBÜRO
### SCHUMANNSTR. 97 D-4000 DÜSSELDORF 1
Telefon: (02 11) 68 33 46                    Telex: 0858 6513 cop d

---

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

---

29.10.81

## Ansprüche

1. Faserförmiger Zuschlag für Beton oder Mörtel, insbesondere Faserabschnitte aus einem Metall, Mineral oder Kunststoff, d a d u r c h   g e k e n n z e i c h - n e t , daß die Faser (2) oder ein Faserbündel (3) mindestens einen Körper (1) trägt, dessen Durchmesser größer ist als die Dicke der Faser oder des Faserbündels und daß die Länge der Faser oder des Faserbündels größer ist als der Durchmesser des Körpers.

2. Zuschlag nach Anspruch 1, d a d u r c h   g e - k e n n z e i c h n e t , daß die Faser (2) oder das Faserbündel (3) etwa mittig durch den Körper (1) verläuft.

3. Zuschlag nach Anspruch 1 oder 2, d a d u r c h   g e - k e n n z e i c h n e t , daß die beiden Enden der Faser (2) oder des Faserbündels (3) von einem Körper (1) nicht umgeben sind.

4. Zuschlag nach Anspruch 3, d a d u r c h   g e - k e n n z e i c h n e t , daß zu beiden Seiten des Körpers (1) ein Teil der Faser (2) oder des Faserbündels (3) herausragt oder ein weiterer Körper (1) angrenzt.

5. Zuschlag nach einem der Ansprüche 1 bis 4, d a -

35 262
HC/Be

durch gekennzeichnet , daß im Körper (1) zwei oder mehr Fasern (2) oder Faserbündel (3) sich kreuzen.

6. Zuschlag nach Anspruch 5, dadurch gekennzeichnet , daß die sich kreuzenden Fasern (2) oder Faserbündel (3) zueinander etwa rechtwinklig liegen.

7. Zuschlag nach Anspruch 5 oder 6, dadurch gekennzeichnet , daß drei Fasern (2) oder Faserbündel (3) entsprechend drei zueinander rechtwinkligen Raumachsen sich kreuzen.

8. Zuschlag nach einem der Ansprüche 5 bis 7, dadurch gekennzeichnet , daß bei zwei oder mehreren Körpern (1) auf einer Faser (2) oder einem Faserbündel (3) jeder Körper zusätzlich quer zur ersten Faser oder Faserbündel angeordnete Fasern oder Faserbündel trägt.

9. Zuschlag nach einem der Ansprüche 5 bis 8, dadurch gekennzeichnet , daß drei, vier oder mehr Körper (1) von drei, vier oder mehr Fasern (2) oder Faserbündeln (3) durchdrungen sind, von denen jede mindestens zwei Körper durchquert.

10. Zuschlag nach einem der Ansprüche 1 bis 9, dadurch gekennzeichnet , daß der Durchmesser der Körper (1) ein Vielfaches der Dicke der Fasern (2) oder des Faserbündels (3) beträgt.

11. Zuschlag nach Anspruch 10, dadurch ge-

k e n n z e i c h n e t , daß der Durchmesser des Körpers (1) 10-1000fach größer ist als die Dicke der Faser (2) oder des Faserbündels (3) ist.

12. Zuschlag nach einem der Ansprüche 1 bis 11, d a - d u r c h   g e k e n n z e i c h n e t , daß der Durchmesser der Körper (1) nicht größer ist als ein Drittel der Faserlänge oder Faserbündellänge.

13. Zuschlag nach einem der Ansprüche 1 bis 12, d a - d u r c h   g e k e n n z e i c h n e t , daß der Körper aus einem Mineral, Kunststoff oder Zellulose besteht.

14. Zuschlag nach einem der Ansprüche 1 bis 13, d a - d u r c h   g e k e n n z e i c h n e t , daß der Körper (1) und/oder das Material des Körpers (1) ein geringeres spezifisches Gewicht hat als die übrigen Bestandteile des Betons oder Mörtels.

15. Zuschlag nach einem der Ansprüche 1 bis 14, d a - d u r c h   g e k e n n z e i c h n e t , daß der Körper (1) einen oder mehrere Hohlräume, insbesondere Poren, aufweist.

16. Zuschlag nach Anspruch 15, d a d u r c h   g e - k e n n z e i c h n e t , daß der Körper (1) aus erhärtetem Schaum besteht.

17. Zuschlag nach einem der Ansprüche 1 bis 16, d a - d u r c h   g e k e n n z e i c h n e t , daß der Körper (1) aus geschäumtem Kunststoff, insbesondere geschäumtem Polystyrol besteht.

18. Zuschlag nach einem der Ansprüche 1 bis 17, d a -

durch gekennzeichnet , daß der Körper etwa die Form einer Kugel, eines Tropfens, Zylinders (1") oder Quaders (1') hat.

19. Zuschlag nach einem der Ansprüche 1 bis 18 , d a - durch gekennzeichnet , daß die Faserenden oder Faserbündelenden gebogen, insbesondere hakenförmig umgebogen sind.

20. Zuschlag nach einem der Ansprüche 1 bis 19, d a - durch gekennzeichnet , daß zwei oder mehr Körper (1) auf einer Faser (2) oder einem Faserbündel (3) in Abständen oder aneinanderliegend angeordnet, insbesondere befestigt sind.

21. Zuschlag nach einem der Ansprüche 1 bis 20, d a - durch gekennzeichnet , daß die Körper (1) durch Gießen, Schmelzen, Schweißen, Tauchen, Kleben oder einstückige Ausformung auf der Faser (2) oder dem Faserbündel (3) befestigt sind.

22. Zuschlag nach einem der Ansprüche 1 bis 21, d a - durch gekennzeichnet , daß Faser (2) oder Faserbündel (3) und Körper (1) aus demselben Material sind.

23. Zuschlag nach einem der Ansprüche 1 bis 22, d a - durch gekennzeichnet , daß die Faser (2) von einer Kunststoffschnur gebildet ist, in der eine Glasfaser oder ein Stahldraht einliegt.

24. Zuschlag nach einem der Ansprüche 1 bis 23, d a - durch gekennzeichnet , daß die

0126167

Faser (2) oder das Faserbündel (3) aus mindestens zwei Einzelfasern besteht, die miteinander verdrillt sind.

25. Zuschlag nach einem der Ansprüche 1 bis 22, d a - d u r c h   g e k e n n z e i c h n e t , daß die Faser (2) oder das Faserbündel (3) zu einem Ring (6) geschlossen ist.

26. Zuschlag nach Anspruch 23, d a d u r c h   g e - k e n n z e i c h n e t , daß auf dem Ring (16) mindestens zwei Körper (1) angeordnet sind.

27. Zuschlag nach Anspruch 25 oder 26, d a d u r c h   g e k e n n z e i c h n e t , daß die Enden des Faser- oder Faserbündel-Abschnittes miteinander verdrillt oder zusammengeschweißt oder gelötet sind.

28. Zuschlag nach einem der Ansprüche 25 bis 27, d a - d u r c h   g e k e n n z e i c h n e t , daß die Enden des Faser- oder Faserbündelabschnittes durch einen Körper (1), insbesondere einen Kunststofftropfen aneinander befestigt sind.

29. Zuschlag nach einem der Ansprüche 25 bis 28, d a - d u r c h   g e k e n n z e i c h n e t , daß die beiden Enden eines Faser- oder Faserbündelabschnittes jeweils in einem Körper (1) einliegen bzw. enden.

30. Zuschlag nach Anspruch 29, d a d u r c h   g e - k e n n z e i c h n e t , daß die Enden in verschiedenen Körpern (1) einliegen.

31. Zuschlag nach Anspruch 30, d a d u r c h  g e -
k e n n z e i c h n e t , daß zumindest über einen
Teil des Ringes (6) die Faser (2) oder das Faserbündel (3) doppelt liegt.

32. Verfahren zum Herstellen von faserförmigem Zuschlag
nach einem der Ansprüche 1 bis 3, d a d u r c h
g e k e n n z e i c h n e t , daß Körper (1), insbesondere thermoplastische Kunststoffkörper auf eine
heiße Faser oder ein heißes Faserbündel aufgebracht
werden und die Faser oder das Faserbündel umschmelzen
bzw. aufschmelzen.

33. Verfahren zum Herstellen von faserförmigem Zuschlag
nach einem der Ansprüche 1 bis 31, d a d u r c h
g e k e n n z e i c h n e t , daß weicher Kunststoff auf die Faser (2) oder das Faserbündel (3) aufgebracht, insbesondere auffließt, aufgetropft oder
aufgedrückt wird.

34. Verfahren nach Anspruch 32 oder 33, d a d u r c h
g e k e n n z e i c h n e t , daß die Kunststoffkörper (1) treibmittelhaltig und insbesondere aus
Polystyrol oder einem Kunststoffharz sind.

35. Verfahren nach Anspruch 32 bis 34, d a d u r c h
g e k e n n z e i c h n e t , daß nach dem Aufbringen der Kunststoffkörper (1) diese insbesondere
durch Energiezufuhr aufschäumen.

36. Verfahren zum Herstellen von faserförmigem Zuschlag
nach einem der Ansprüche 1 bis 31, d a d u r c h
g e k e n n z e i c h n e t , daß eine treibmittelhaltige Kunststoffaser, insbesondere eine mit Stahldraht verzwirnte Kunststoffaser durch partielle Energiezufuhr, insbesondere partielles Erwärmen stellenweise aufgeschäumt wird.

37. Verfahren nach einem der Ansprüche 32 bis 36, d a - d u r c h   g e k e n n z e i c h n e t , daß nach dem Aufbringen der Kunststoffkörper (1) auf eine vorbeilaufende lange Faser (2) oder langes Faserbündel (3) die Faser (2) oder das Faserbündel (3) in Körper (1) tragende Abschnitte getrennt wird.

38. Verfahren zum Herstellen von faserförmigem Zuschlag nach einem der Ansprüche 1 bis 31, d a d u r c h   g e k e n n z e i c h n e t ,  daß auf mehrere parallel in einer Ebene zueinander angeordnete Fasern (2) oder Faserbündel (3) großer Länge quer dazu angeordnete, zueinander parallele Stränge (4) aus dem Material der Körper (1), insbesondere Kunststoffstränge gelegt werden, die Fasern (2) in das Material der Stränge (4) eindringen, insbesondere durch Einschmelzen oder aufgrund der weichen Konsistenz des Materials, und danach die Fasern (2) bzw. die Faserbündel (3) und die Stränge (4) in die gewünschten Längen getrennt werden.

39. Verfahren zum Herstellen von faserförmigem Zuschlag nach einem der Ansprüche 1 bis 31, d a d u r c h   g e k e n n z e i c h n e t ,  daß auf mehrere in einer Ebene zueinander parallel angeordnete Fasern (2) oder Faserbündel (3) großer Länge quer dazu angeordnete, zueinander parallele Fasern (2) oder Faserbündel (3) gelegt werden und auf den Kreuzungspunkten Körper (1), insbesondere Kunststoffkugeln, -perlen

0126167

oder -tropfen aufschmelzen, auffließen oder aufgedrückt werden.

40. Verfahren nach einem der Ansprüche 32 bis 38, d a -
d u r c h   g e k e n n z e i c h n e t , daß während der Herstellung Fasern und Kunststoff in Richtung einer Faserlängsachse oder quer dazu kontinuierlich oder schrittweise insbesondere zur Schneidvorrichtung hin bewegt werden.

41. Verfahren nach einem der Ansprüche 32 bis 40, d a -
d u r c h   g e k e n n z e i c h n e t , daß die Körper (1) oder die Stränge (4) auf die Fasern (2) oder Faserbündel (3) aufgewalzt werden.

0126167

Fig.1  Fig.2  Fig.3

Fig.4  Fig.5  Fig.6

Fig.7  Fig.8  Fig.9

Fig.10  Fig.11

Fig.12  Fig.13

Fig.14  Fig.15  Fig.16

0126167

Fig.17

Fig.18

Fig.19

Fig.20

Fig.21

Fig.22

Fig.23

Fig. 24

Fig. 25

Fig. 26

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.³) |
|---|---|---|---|
| X | GB-A- 592 890 (J.G. JACKSON) <br> * Ansprüche 1,2,7 * | 1 | C 04 B 31/40 <br> C 04 B 29/04 <br> E 04 C 5/07 |
| X | DE-A-2 930 939 (HEIDELBERGER ZEMENT AG) <br> * Ansprüche 1,4,8; Figur 1 * | 1,2 | |
| A | EP-A-0 006 318 (PLASTICISERS LTD.) <br> * Seite 4, Zeilen 17-20 * | 1 | |
| A | DE-A-3 024 648 (J. HOLLATZ) <br> * Ansprüche 1,4,14-17; Seite 15, Zeilen 10-13; Figuren 6-9 * | 1,5,6 | |
| A | US-A-4 076 884 (V. RILEY et al.) <br> * Spalte 4, Zeilen 6-9 * | 1 | RECHERCHIERTE SACHGEBIETE (Int. Cl.³) |
| A | US-A-3 637 457 (E.S. GOTHARD et al.) <br> * Anspruch 1; Spalte 2, Zeilen 28-31; Spalte 3, Zeilen 42-50 * | 1,5 | C 04 B 29/04 <br> C 04 B 31/00 <br> E 04 C 5/07 |
| A | GB-A-1 469 647 (PORTLAND ZEMENTWERKE HEIDELBERG AG) <br> * Ansprüche 1,14,15,19 * | 1 | |

Der vorliegende Recherchenbericht wurde für alle Patentansprüche erstellt.

| Recherchenort <br> BERLIN | Abschlußdatum der Recherche <br> 04-01-1984 | Prüfer <br> STROUD J.G. |
|---|---|---|